(19) Europäisches Patentamt
European Patent Office
Office européen des brevets

(11) EP 3 480 266 A1

(12) EUROPEAN PATENT APPLICATION
published in accordance with Art. 153(4) EPC

(43) Date of publication:
**08.05.2019 Bulletin 2019/19**

(21) Application number: **17820354.3**

(22) Date of filing: **30.06.2017**

(51) Int Cl.:
***C09D 201/00*** *(2006.01)* ***B05D 3/06*** *(2006.01)*
***B05D 7/24*** *(2006.01)* ***C08G 59/68*** *(2006.01)*
***C08J 7/04*** *(2006.01)* ***C09D 163/00*** *(2006.01)*
***G02C 7/02*** *(2006.01)* ***C08G 65/18*** *(2006.01)*

(86) International application number:
**PCT/JP2017/024249**

(87) International publication number:
**WO 2018/004000 (04.01.2018 Gazette 2018/01)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **30.06.2016 JP 2016131092**

(71) Applicant: **Hoya Lens Thailand Ltd.**
**Pathumthani 12130 (TH)**

(72) Inventors:
- **HAMAKUBO, Katsushi**
**Tokyo 160-8347 (JP)**
- **TASAKI, Natsumi**
**Tokyo 160-8347 (JP)**

(74) Representative: **Hoffmann Eitle**
**Patent- und Rechtsanwälte PartmbB**
**Arabellastraße 30**
**81925 München (DE)**

# (54) COATING COMPOSITION, EYEGLASS LENS, AND METHOD FOR MANUFACTURING EYEGLASS LENS

(57) An object of an embodiment of the present disclosure is to provide: a coating composition capable of forming a hard coat layer having excellent adhesion and scratch resistance; a spectacle lens; and a method for producing a spectacle lens.

[1] A coating composition containing: hydrophobic inorganic oxide particles (A); a silane coupling agent (B); and a cationic photopolymerization initiator (C).

[2] A spectacle lens including: a hard coat layer obtained by curing the coating composition; and a substrate.

[3] A method for producing a spectacle lens, including: a step of applying the coating composition onto a substrate; and

a step of curing the applied coating composition by irradiating the coating composition with light.

EP 3 480 266 A1

## Description

Technical Field

The present disclosure relates to a coating composition, a spectacle lens including a coat layer obtained by curing a coating composition, and a method for producing a spectacle lens.

Background Art

A plastic spectacle lens has a lighter weight and better impact resistance than glass, but has insufficient surface hardness. Therefore, a surface of the plastic spectacle lens is coated with various hard coat layers to improve scratch resistance.

A coating composition curing method for forming a hard coat layer is roughly classified into thermal curing and photocuring.

Thermal curing obtains a high scratch resistance improving effect, but has long curing time and a short pot life.

Meanwhile, photocuring has short curing time and high productivity, but tends to have inferior scratch resistance to thermal curing. Particularly, various photocurable coating compositions have been proposed from a viewpoint of productivity, but it is said that it is difficult to achieve both wear resistance and adhesion to various substrates.

Patent Literature 1 relates to a method for producing a photocurable hard coat film-coated plastic spectacle lens having excellent scratch resistance and adhesion, and describes a method for applying a photocurable coating liquid containing a compound having at least two (meth)acryloyl groups in a molecule thereof (A), an ionic photopolymerization initiator (B), and metal oxide particles (C) onto a surface of a plastic substrate and photo-curing the photocurable coating liquid by irradiation with radiation.

Patent Literature 2 relates to an optical component coating composition capable of forming a coat layer having scratch resistance and weather resistance and cured in a short time, and describes an optical component coating composition containing a compound having an epoxy group, a cationic photopolymerization initiator, an organic solvent, and inorganic fine particles dispersed in the organic solvent.

Citation List

Patent Literature

Patent Literature 1: JP 2005-343119 A
Patent Literature 2: JP 2010-031090 A

Summary of Invention

Technical Problem

However, neither of the hard coat layers obtained by the techniques of Patent Literatures 1 and 2 satisfy market needs sufficiently in view of achieving both adhesion and scratch resistance.

An object of an embodiment of the present disclosure is to provide: a coating composition capable of forming a hard coat layer having excellent adhesion and scratch resistance; a spectacle lens; and a method for producing a spectacle lens.

Solution to Problem

The embodiment of the present disclosure relates to [1] to [3].

[1] A coating composition containing: hydrophobic inorganic oxide particles (A); a silane coupling agent (B); and a cationic photopolymerization initiator (C).
[2] A spectacle lens including: a hard coat layer obtained by curing the coating composition; and a substrate.
[3] A method for producing a spectacle lens, including:

a step of applying the coating composition onto a substrate; and
a step of curing the applied coating composition by irradiating the coating composition with light.

Advantageous Effects of Invention

According to the above embodiment, it is possible to provide: a coating composition to form a hard coat layer having excellent adhesion and scratch resistance; a spectacle lens; and a method for producing a spectacle lens.

Description of Embodiments

The coating composition of the present disclosure contains hydrophobic inorganic oxide particles (A), a silane coupling agent (B), and a cationic photopolymerization initiator (C). By selecting hydrophobic inorganic oxide particles, a hard coat layer having excellent adhesion and scratch resistance can be obtained.

[Hydrophobic inorganic oxide particles (A)]

In the embodiment of the present disclosure, the hydrophobic inorganic oxide particles (A) are used.

Here, "hydrophobic inorganic oxide particles" means "inorganic oxide particles having compatibility with a polyfunctional acrylate".

Here, "hydrophobic" means that light transmittance at a wavelength of 660 nm is more than 50% in a dipentaerythritol acrylate compound R-1 affinity test as illustrated in Examples. The above index indicates that, in a test for examining affinity with a specific organic substance, a substance having the above numerical value has high affinity with an organic substance.

In the affinity test, the light transmittance at a wavelength of 660 nm is preferably more than 60%, more preferably more than 70%, still more preferably more than 80%, further still more preferably more than 85%, and further still more preferably more than 90% from viewpoints of obtaining better scratch resistance and better adhesion. The light transmittance is, for example, preferably 98% or less, and more preferably 95% or less.

Examples of the hydrophobic inorganic oxide particles (A) include fine particles of silicon oxide (silica), titanium oxide (titania), aluminum oxide (alumina), zirconium oxide (zirconia), iron oxide, antimony oxide, tin oxide, and tungsten oxide. Among these particles, at least one selected from the group consisting of silica particles and zirconia particles is preferable, and silica particles are more preferable from a viewpoint of obtaining better scratch resistance. These particles may be used alone or in combination of two or more kinds thereof.

The hydrophobic inorganic oxide particles (A) may be surface-treated with an organic treating agent.

The average particle diameter of the hydrophobic inorganic oxide particles (A) is preferably 1 to 100 nm, more preferably 5 to 50 nm, and still more preferably 5 to 30 nm from viewpoints of increasing film hardness and suppressing haze of a film itself. The average particle diameter of the hydrophobic inorganic oxide particles (A) is a value calculated from specific surface area data by a Brunauer-Emmett-Teller equation (BET) method.

The blending amount of the hydrophobic inorganic oxide particles (A) is preferably 10 to 80% by mass, more preferably 20 to 70% by mass, and still more preferably 30 to 60% by mass with respect to the solid content of the coating composition.

As the hydrophobic inorganic oxide particles (A), an inorganic oxide sol in which the hydrophobic inorganic oxide particles (A) are dispersed in an organic solvent may be used.

The organic solvent used for the inorganic oxide sol is preferably at least one selected from the group consisting of an ether-based solvent, an ester-based solvent, an acetal-based solvent, and a nonpolar solvent, and specific examples thereof include propylene glycol monomethyl ether (hereinafter also referred to as "PGM"), methyl ethyl ketone, and ethylene glycol mono-n-propyl ether. Examples of a commercially available product of the hydrophobic inorganic oxide particles (A) include trade name "V-8804" manufactured by JGC Catalysts and Chemicals Ltd. and trade names "PGM-AC-2140Y" and "MEK-EC-2130Y" manufactured by Nissan Chemical Corporation.

Due to use of the inorganic oxide sol, the hydrophobic inorganic oxide particles are dispersed colloidally in the coating composition, and a phenomenon that the hydrophobic inorganic oxide particles are unevenly present in a coating film is suppressed.

[Silane Coupling Agent (B)]

The silane coupling agent (B) is added for curing the coating composition.

In order to obtain excellent scratch resistance, the silane coupling agent (B) used in the coating composition preferably contains at least one organic functional group selected from the group consisting of an epoxy group and an oxetanyl group as a functional group.

The silane coupling agent (B) is preferably a compound represented by the following general formula (1):

[Chemical Formula 1]

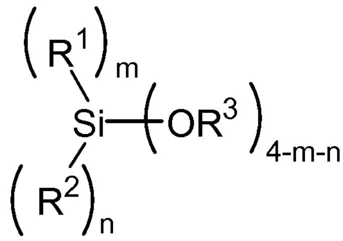

(1)

[wherein $R^1$ represents at least one functional group selected from the group consisting of an epoxy group, an oxetanyl group, and a substituent containing these groups, or a monovalent hydrocarbon group having 1 to 20 carbon atoms, having the functional group as a substituent, $R^2$ represents an alkyl group, an aryl group, an aralkyl group, or an acyl group, $R^3$ represents an alkyl group, an aryl group, an aralkyl group, or an acyl group, m represents an integer of 1 to 4, and n represents an integer of 1 to 4. Provided that (m + n) is an integer of 3 or less].

Examples of the functional group for $R^1$ include an epoxy group, an oxetanyl group, a glycidyloxy group, and an oxetanyloxy group.

Specific examples of $R^1$ include a $\gamma$-glycidoxymethyl group, a $\gamma$-glycidoxyethyl group, a $\gamma$-glycidoxypropyl group, a $\beta$-epoxycyclohexylmethyl group, a $\beta$-epoxycyclohexylethyl group, and a $\beta$-epoxycyclohexylpropyl group.

Note that "carbon number" for a group having a substituent here means the number of carbon atoms in a portion excluding the substituent.

The alkyl group for $R^2$ and $R^3$ is preferably a linear, branched, or cyclic alkyl group having 1 to 8 carbon atoms. Examples thereof include a methyl group, an ethyl group, a n-propyl group, an iso-propyl group, a n-butyl group, an iso-butyl group, a sec-butyl group, a tert-butyl group, a pentyl group, a hexyl group, a cyclopentyl group, and a cyclohexyl group. Among these groups, a methyl group or an ethyl group is preferable.

The aryl group for $R^2$ and $R^3$ is preferably an aryl group having 6 to 10 carbon atoms, such as a phenyl group or a tolyl group.

The aralkyl group for $R^2$ and $R^3$ is preferably an aralkyl group having 7 to 10 carbon atoms, such as a benzyl group or a phenethyl group.

The acyl group for $R^2$ and $R^3$ is preferably an acyl group having 2 to 10 carbon atoms, such as an acetyl group.

m is preferably an integer of 1 to 3, more preferably an integer of 1 or 2, and still more preferably 1.

n is preferably an integer of 0 to 3, more preferably an integer of 0 or 1, and still more preferably 1.

When there is a plurality of $R^1$s in general formula (1), the plurality of $R^1$s may be the same as or different from each other. The same applies to $R^2$ and $R^3$.

Specific examples of the silane coupling agent (B) include 2-(3,4-epoxycyclohexyl) ethyltrimethoxysilane, 3-glycidoxypropylmethyldimethoxysilane, 3-glycidoxypropyltrimethoxysilane, 3-glycidoxypropylmethyldiethoxysilane, 3-glycidoxypropyltriethoxysilane, and 3-ethyl-3-{[3-(triethoxysilyl) propoxy] methyl} oxetane.

The blending amount of the silane coupling agent (B) is preferably 5 to 80% by mass, more preferably 7 to 70% by mass, and still more preferably 10 to 60% by mass with respect to the solid content of the coating composition from viewpoints of improving scratch resistance and adhesion.

The blending amount of the silane coupling agent (B) is preferably 30 to 80% by mass, more preferably 40 to 70% by mass, and still more preferably 40 to 60% by mass with respect to the solid content of the coating composition from a viewpoint of further improving scratch resistance.

The silane coupling agent (B) containing at least one selected from the group consisting of an epoxy group and an oxetanyl group and a silane coupling agent (B') containing at least one selected from the group consisting of a vinyl group, a methacryl group, and an acryl group can be used in combination.

Specific examples of the silane coupling agent (B') to be used in combination include vinyltrimethoxysilane, vinyltriethoxysilane, 3-methacryloxypropylmethyldimethoxysilane, 3-methacryloxypropyltrimethoxysilane, 3-methacryloxypropylmethyldiethoxysilane, and 3-methacryloxypropyltriethoxysilane.

The blending amount of the silane coupling agent (B') is preferably 1 to 50% by mass, more preferably 3 to 30% by mass, and still more preferably 5 to 20% by mass with respect to the solid content of the coating composition.

[Cationic photopolymerization initiator (C)]

The cationic photopolymerization initiator (C) is a compound that generates a cation or a Lewis acid by irradiation with an active energy ray such as an ultraviolet ray or an electron ray to initiate polymerization of a monomer such as an epoxy compound or an oxetane compound.

The cationic photopolymerization initiator (C) is preferably a compound that generates a cation or a Lewis acid by irradiation with ultraviolet light having a wavelength of 400 to 315 nm in order to minimize an influence of light irradiation on a lens substrate.

Examples of the cationic photopolymerization initiator (C) include a sulfonium salt, an iodonium salt, and a diazonium salt.

Examples of the sulfonium salt include triarylsulfonium salts such as triphenylsulfonium hexafluorophosphate, triphenylsulfonium hexafluoroantimonate, triphenylsulfonium tetrakis(pentafluorophenyl) borate, diphenyl-4-(phenylthio) phenylsulfonium hexafluorophosphate, diphenyl-4-(phenylthio) phenylsulfonium hexafluoroantimonate, 4,4'-bis[diphenylsulfonio] diphenylsulfide bishexafluorophosphate, 4,4'-bis[di(β-hydroxyethoxy) phenylsulfonio] diphenylsulfide bishexafluoroantimonate, 4,4'-bis[di(β-hydroxyethoxy) phenylsulfonio] diphenylsulfide bishexafluorophosphate, 7-[di(p-toluyl)] sulfonio]-2-isopropylthioxanthone hexafluoroantimonate, 7-[di(p-toluyl) sulfonio]-2-isopropylthioxanthone tetrakis(pentafluorophenyl) borate, 4-phenylcarbonyl-4'-diphenylsulfonio-diphenylsulfide hexafluorophosphate, 4-(p-tert-butylphenylcarbonyl)-4'-diphenylsulfonio-diphenylsulfide hexafluoroantimonate, and 4-(p-tert-butylphenylcarbonyl)-4'-di(p-toluyl) sulfonio-diphenyl sulfide tetrakis(pentafluorophenyl) borate.

Examples of the iodonium salt include diaryliodonium salts such as diphenyliodonium tetrakis(pentafluorophenyl) borate, diphenyliodonium hexafluorophosphate, diphenyliodonium hexafluoroantimonate, di(4-t-butylphenyl) iodonium hexafluorophosphate, di(4-t-butylphenyl) iodonium hexafluoroantimonate, tolylcumyliodonium tetrakis(pentafluorophenyl) borate, (4-methylphenyl) [4-(2-methylpropyl) phenyl]-hexafluorophosphate, di(4-nonylphenyl) iodonium hexafluorophosphate, and di(4-alkylphenyl) iodonium hexafluorophosphate.

Examples of the diazonium salt include benzene diazonium hexafluoroantimonate and benzene diazonium hexafluorophosphate.

Examples of a commercially available product of the cationic photopolymerization initiator (C) include: trade names ADEKA optomer series "SP-100", "SP-150", "SP-152", "SP-170", and "SP-172", manufactured by ADEKA Corporation; trade name "Photoinitiator 2074", manufactured by Rhodia; Kayarad PCI-220 and PCI-620, manufactured by Nippon Kayaku Co., Ltd.; Irgacure 250, manufactured by Ciba Japan Co., Ltd.; CPI-100P, CPI-110P, CPI-101A, CPI-200K, and CPI-210S, manufactured by San-Apro Ltd.; WPI-113 and WPI-116, manufactured by Wako Pure Chemical Industries, Ltd.; and BBI-102, BBI-103, TPS-102, TPS-103, DTS-102, and DTS-103, manufactured by Midori Kagaku Co., Ltd.

Among these compounds, the cationic photopolymerization initiator is preferably a sulfonium salt, and more preferably diphenyl-4-(phenylthio) phenylsulfonium hexafluorophosphate or diphenyl-4-(phenylthio) phenylsulfonium hexafluoroantimonate.

The blending amount of the cationic photopolymerization initiator (C) is preferably 0.1 to 10% by mass, more preferably 0.5 to 8% by mass, still more preferably 1 to 7% by mass, further still more preferably 3 to 7% by mass, and further still more preferably 4 to 7% by mass with respect to the total amount of the silane coupling agent (B) and a polyfunctional epoxy compound (D).

[Polyfunctional Epoxy Compound (D)]

The coating composition may contain the polyfunctional epoxy compound (D).

Examples of the polyfunctional epoxy compound (D) include sorbitol polyglycidyl ether, polyglycerol polyglycidyl ether, pentaerythritol polyglycidyl ether, diglycerol polyglycidyl ether, glycerol polyglycidyl ether, trimethylolpropane polyglycidyl ether, resorcinol diglycidyl ether, neopentyl glycol diglycidyl ether, 1,6-hexanediol diglycidyl ether, hydrogenated bisphenol A diglycidyl ether, ethylene-polyethylene glycol diglycidyl ether, propylene-polypropylene glycol diglycidyl ether, allyl glycidyl ether, 2-ethylhexyl glycidyl ether, phenyl glycidyl ether, phenol polyethylene oxide adduct glycidyl ether, p-tert-butylphenyl glycidyl ether, lauryl alcohol polyethylene oxide adduct glycidyl ether, and polybutadiene diglycidyl ether.

The blending amount of the polyfunctional epoxy compound (D) is preferably 10 to 50% by mass, more preferably 15 to 45% by mass, and still more preferably 20 to 40% by mass with respect to the solid content.

[Leveling Agent]

A leveling agent is preferably added to the coating composition in order to improve wettability during application to form a uniform film. As the leveling agent, various leveling agents can be used. Among the leveling agents, a polyoxyalkylene-dimethylpolysiloxane copolymer (for example, trade name "Y-7006", manufactured by Toray Dow Corning Co., Ltd.) is preferably used. The blending amount of the leveling agent in the coating composition can be adjusted according to the viscosity, wettability, and the like of the composition, but can be, for example, 0.01 to 1% by mass.

The coating composition may contain an organic solvent in order to form a uniform film.

The organic solvent is preferably at least one selected from the group consisting of an ether-based solvent, an

ester-based solvent, an acetal-based solvent, and a nonpolar solvent, and specific examples thereof include propylene glycol monomethyl ether (hereinafter also referred to as "PGM"), methyl ethyl ketone, and ethylene glycol mono-n-propyl ether.

In addition to the above-described components, the coating composition may contain known additives such as an ultraviolet absorber, an infrared absorber, a light stabilizer, an antioxidant, a dye, a pigment, a photochromic agent, and an antistatic agent.

The solid content in the coating composition is preferably 10 to 70% by mass, more preferably 20 to 60% by mass, and still more preferably 30 to 50% by mass with respect to the total amount of the composition. Note that the solid content here means the content of components other than a solvent.

A filler/matrix mass ratio (hereinafter also simply referred to as "F/M") in the coating composition is preferably 0.4 to 1.8, more preferably 0.6 to 1.4, and still more preferably 0.6 to 1.2.

The filler/matrix mass ratio means a mass ratio between the total amount of the inorganic oxide particles (A) and the total amount of the silane coupling agent (B) and the polyfunctional epoxy compound (D).

The coating composition is obtained by mixing the above components. A method for producing the coating composition preferably includes a step of stirring and mixing the hydrophobic inorganic oxide particles (A), the silane coupling agent (B), an organic solvent, and the cationic photopolymerization initiator (C).

The coating composition can be used for forming a hard coat layer of a spectacle lens.

A method for producing a spectacle lens having a hard coat layer includes: a step of applying the coating composition onto a substrate; and a step of curing the applied coating composition by irradiating the coating composition with light from viewpoints of obtaining excellent scratch resistance and excellent adhesion.

Glass can also be used as the substrate, but a plastic such as a synthetic resin substrate is particularly preferable.

Examples of the plastic for the substrate include a copolymer of methyl methacrylate and one or more other monomers, a copolymer of diethylene glycol bisallyl carbonate and one or more other monomers, polycarbonate, polystyrene, polyvinyl chloride, unsaturated polyester, polyethylene terephthalate, polyurethane, polythiourethane, a sulfide resin utilizing an ene-thiol reaction, and a vinyl polymer containing sulfur, but are not limited thereto.

As a method for applying the coating composition onto the substrate, a dipping method, a spinning method, a spraying method, or the like is usually applied, but the dipping method and the spinning method are desirable from a viewpoint of surface accuracy.

Note that, before a coating material is applied onto the substrate, a chemical treatment with an acid, an alkali, or various organic solvents, a physical treatment with plasma, an ultraviolet ray, or the like, and a washing treatment with various detergents can be performed.

The coating composition is irradiated with light and cured, and a hard coat layer can be thereby formed.

As a light source, a known light source can be used without any limitation. Specific examples thereof include an ultrahigh pressure mercury lamp, a high pressure mercury lamp, a low pressure mercury lamp, a xenon lamp, a carbon arc, a sterilizing lamp, and an electrodeless lamp.

As the light, an ultraviolet ray is preferable. The wavelength of the ultraviolet ray is preferably 315 to 400 nm.

The method for producing a spectacle lens preferably further includes a step of heating the coating composition at 50 to 200°C after the curing step from viewpoints of obtaining better scratch resistance and better adhesion.

The heating temperature is preferably 60 to 180°C, more preferably 70 to 150°C, and still more preferably 80 to 130°C.

The heating time is preferably 30 minutes to 3 hours, more preferably 40 minutes to 2 hours, and still more preferably 45 minutes to 1.5 hours.

The thickness of the hard coat layer is preferably 0.5 to 50 μm, more preferably 5 to 20 μm, and still more preferably 1 to 5 μm.

In the above producing method, an interference fringe reducing layer can be further formed. The interference fringe reducing layer is disposed in order to suppress generation of an interference fringe on a surface of the spectacle lens.

The interference fringe reducing layer preferably satisfies the following conditions 1 and 2 from a viewpoint of more significantly preventing generation of an interference fringe.

<Condition 1> A refractive index $n_p$ of an interference fringe reducing layer satisfies the following formula (I).

$$(n_s \cdot n_H)^{1/2} + |n_s - n_H|/4 \geq n_p \geq (n_s \cdot n_H)^{1/2} - |n_s - n_H|/4 \quad (I)$$

($n_s$ represents the refractive index of a plastic substrate, and $n_H$ represents the refractive index of a hard coat layer)

<Condition 2> A film thickness d of an interference fringe reducing layer satisfies the following formula (II).

$$d = \lambda/(4n_p) \quad (II)$$

($\lambda$ represents the wavelength of visible light, indicating 450 to 650 nm)

The interference fringe reducing layer can be obtained by a similar method to the above-described formation of the coat layer.

The physical film thickness of the interference fringe reducing layer is preferably 50 to 100 nm, and more preferably 60 to 95 nm in order to suppress an interference fringe.

In the above producing method, an antireflection film can be further formed on the hard coat layer.

The configuration of this antireflection film is not particularly limited, and a conventionally known single layer or multilayer film made of an inorganic oxide can be used.

As the multilayer film, for example, a configuration is considered in which a $SiO_2$ film and a $ZrO_2$ film are alternately laminated so as to obtain $\lambda/4$-$\lambda/2$-$\lambda/4$ with respect to a wavelength $\lambda$ of incident light.

The hard coat layer formed by applying and curing the coating composition has excellent scratch resistance and adhesion to the substrate.

The spectacle lens according to the embodiment of the present disclosure preferably includes a hard coat layer obtained by curing the coating composition of the present disclosure and a substrate, and more preferably includes a hard coat layer obtained by curing the coating composition of the present invention, an antireflection film disposed on the hard coat layer, and a substrate from viewpoints of obtaining excellent scratch resistance and excellent adhesion.

In the embodiment of present invention, as for the examples of components, contents, and physical properties, matters exemplified or described as a preferable range in the detailed description of the invention may be combined with each other arbitrarily.

In addition, by adjusting the composition described in Examples so as to be the composition described in the detailed description of the invention, the invention can be performed in a similar manner to Examples in the entire claimed composition range.

Examples

Specific Examples are described below, but the present claims are not limited by the following Examples.

In Examples, an affinity test was performed by the following procedure.

[Affinity Test]

A sol containing inorganic oxide particles was mixed with a dipentaerythritol acrylate compound R-1 (trade name "KATARAD DPCA-30", manufactured by Nippon Kayaku Co., Ltd.) represented by the following formula in a ratio such that F/M was 0.8. The sample thus obtained was set in a cell of 10 mm × 10 mm. Light transmittance at a wavelength of 660 nm was measured according to JIS K 0101:1998.

[Chemical Formula 2]

R-1

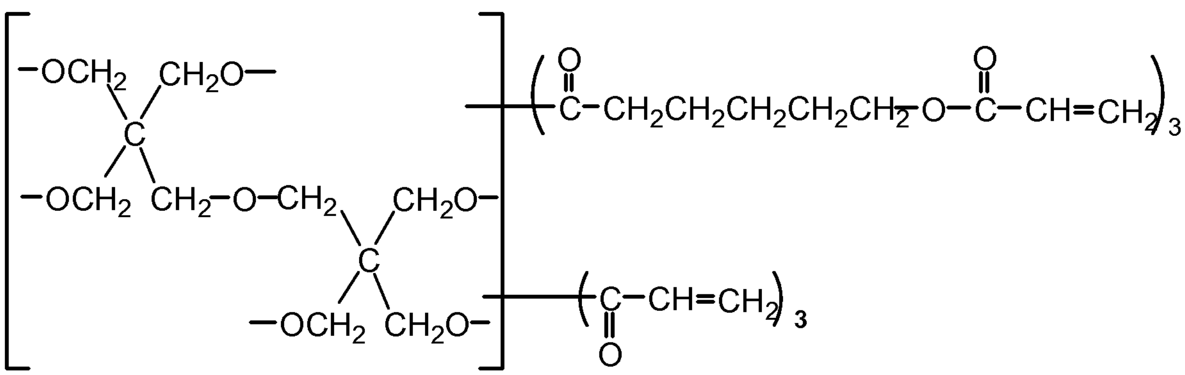

Note that this light transmittance was measured under room temperature conditions within 24 hours after the sample was prepared. Results of the measurement are illustrated in Tables.

<Example 1>

(Preparation of Coating Composition)

In a glass container equipped with a magnetic stirrer, 21.89 g of a silica sol (trade name "V-8804", manufactured by JGC Catalysts and Chemicals Ltd.) (solid content 40% by mass) was put as the hydrophobic inorganic oxide particles (A), and 11.11 g of γ-glycidoxypropyltrimethoxysilane (trade name "KBM 403", manufactured by Shin-Etsu Chemical Co., Ltd.) was further added dropwise thereto as the silane coupling agent (B) under stirring.

After completion of the dropwise addition, 17.00 g of propylene glycol monomethyl ether (hereinafter also simply referred to as "PGM") was added as a solvent, and 0.03 g (solid content) of a leveling agent (trade name "Y-7006", polyoxyalkylene dimethylpolysiloxane copolymer, manufactured by Toray Dow Corning Co., 10% by mass PCM solution) and 0.67 g (solid content) of the cationic photopolymerization initiator (C) (trade name "CPI-100 P", manufactured by San-Apro Ltd., solid content: 50% by mass) were further added. The resulting mixture was thoroughly stirred, and then was filtered to obtain a coating composition.

(Application curing)

Diethylene glycol bisallyl carbonate (manufactured by HOYA Corporation, trade name "HL", refractive index: 1.50, frequency: -4.00, center thickness: 2.0 mm) was used as a substrate of a plastic lens. This substrate was immersed in a 10% by mass sodium hydroxide aqueous solution at 45°C for five minutes, and was sufficiently dried.

Thereafter, the coating composition prepared by the above method was used, and application was performed by a spinning method (rotational speed: 1000 rpm). Note that the state of a coating film was observed, and it was confirmed whether the coating film was transparent or cloudy. Results thereof are illustrated in Tables.

Furthermore, the coating composition was irradiated with an ultraviolet ray for 30 seconds and cured to form a transparent hard coat layer. Evaluation results are illustrated in Table 1.

<Examples 2 and 3 and Comparative Example 1>

Coating compositions in Examples 2 and 3 and Comparative Example 1 were obtained, and hard coat layers were further formed under similar conditions to those in Example 1 except that the coating compositions illustrated in Table 1 were used. Evaluation results are illustrated in Table 1.

<Example 4>

In a glass container equipped with a magnetic stirrer, 21.89 g of a silica sol (trade name "V-8804", manufactured by JGC Catalysts and Chemicals Ltd.) (solid content 40% by mass) was put as the hydrophobic inorganic oxide particles (A), and 5.56 g of γ-glycidoxypropyltrimethoxysilane (trade name "KBM 403", manufactured by Shin-Etsu Chemical Co., Ltd.), as the silane coupling agent (B), and 5.56 g of trimethylolpropane polyglycidyl ether (trade name "EX-321", manufactured by Nagase ChemteX Corporation) were further added dropwise thereto under stirring.

After completion of the dropwise addition, a coating composition in Example 4 was obtained under similar conditions to those in Example 1. Evaluation results are illustrated in Table 1.

<Examples 5 and 6 and Comparative Example 2>

Coating compositions in Examples 5 and 6 and Comparative Example 2 were obtained, and hard coat layers were further formed under similar conditions to those in Example 4 except that the coating compositions illustrated in Table 1 were used. Evaluation results are illustrated in Table 1.

<Examples 7 to 9 and Comparative Example 3>

Hard coat layers in Examples 7 to 9 and Comparative Example 3 were obtained, and hard coat layers were further formed in a similar manner to Example 1 except that the coating compositions illustrated in Table 2 were used and that heating was performed at 100°C for one hour after irradiation with an ultraviolet ray in Example 1. Evaluation results are illustrated in Table 2.

<Examples 10 to 12 and Comparative Example 4>

Hard coat layers in Examples 10 to 12 and Comparative Example 4 were obtained, and hard coat layers were further formed in a similar manner to Example 4 except that the coating compositions illustrated in Table 2 were used and that heating was performed at 100°C for one hour after irradiation with an ultraviolet ray in Example 4. Evaluation results are illustrated in Table 2.

An evaluation method was as follows.

[Evaluation of SW Film Scratch Resistance]

A surface was rubbed 10 times reciprocally with a load of 2 kg with a steel wool #0000 (manufactured by Nippon Steel Wool Co., Ltd.), and difficulty in scratching was visually judged. Criteria are as follows.

5: Few scratches are generated
4: 1 to 10 scratches are generated
3: 10 to 30 scratches are generated
2: A surface becomes cloudy
1: A hard coat layer is peeled off

[Adhesion Test]

Cross-cut was performed at intervals of 1.5 mm on a surface of a hard coat layer to obtain 100 grids. An adhesive tape (Cellotape (registered trademark), manufactured by Nichiban Co., Ltd.) was strongly bonded to a cross-cut portion, and then the adhesive tape was rapidly peeled off. At this time, presence or absence of peeling of a cured film and the number of peeled grids were examined. A sample that caused no peeing was evaluated as 100/100. A sample that caused entire peeling was evaluated as 0/100.

The materials illustrated in Tables are as follows.

[Inorganic Oxide (A)]

V-8804: Hydrophobic silica sol (trade name "V-8804", manufactured by JGC Catalysts and Chemicals Ltd., solid content: 40% by mass, average particle diameter: 12 nm)
PGM AC2140Y: Hydrophobic silica sol (trade name "PGM-AC-2140Y", manufactured by Nissan Chemical Industries, Ltd., solid content: 40% by mass, average particle diameter: 13 nm)
MEK-EC2130Y: Hydrophobic silica sol (trade name "MEK-EC-2130Y", manufactured by Nissan Chemical Industries, Ltd., solid content: 30% by mass, average particle diameter: 13 nm)
PGM-ST: Hydrophilic silica sol (trade name "PGM-ST", manufactured by Nissan Chemical Industries, Ltd., solid content: 30% by mass, average particle diameter: 13 nm)

[Silane Coupling Agent (B)]

KBM 403: γ-Glycidoxypropyltrimethoxysilane (trade name "KBM 403", manufactured by Shin-Etsu Chemical Co., Ltd. )

[Cationic Initiator (C)]

CPI-100P: Diphenyl-4-(phenylthio) phenylsulfonium hexafluorophosphate (trade name "CPI-100P", San-Apro Ltd., solid content: 50% by mass)

[Polyfunctional Epoxy Compound (D)]

EX-321: Trimethylolpropane polyglycidyl ether (trade name "EX-321", manufactured by Nagase ChemteX Corporation)

[Leveling Agent]

y7006: Polyoxyalkylene dimethyl polysiloxane copolymer (trade name "Y-7006", manufactured by Toray Dow Corning Co., 10% by mass PGM solution)

[Table 1-1]

Table 1 (1/2)

| | | Example 1 | Example 2 | Example 3 | Example 4 |
|---|---|---|---|---|---|
| Process | | UV | UV | UV | UV |
| Inorganic oxide (A) | Product name | V-8804 | PGM AC2140Y | MEK-EC2130Y | V-8804 |
| | Type of sol | $SiO_2$ | $SiO_2$ | $SiO_2$ | $SiO_2$ |
| | Affinity test (%) | 93 | 91 | 90 | 93 |
| | Total amount containing solvent (g) | 21.89 | 21.89 | 29.63 | 21.89 |
| | Solid content (g) | 8.76 | 8.76 | 8.89 | 8.76 |
| | Mass ratio*1 | 42.6% | 42.6% | 42.9% | 42.6% |
| Silane coupling agent (B) | Type | KBM403 | KBM403 | KBM403 | KBM403 |
| | Solid content (g) | 11.11 | 11.11 | 11.11 | 5.56 |
| | Mass ratio*1 | 54.0% | 54.0% | 53.7% | 27.0% |
| Polyfunctional epoxy compound (D) | Type | - | - | - | EX321 |
| | Solid content (g) | - | - | - | 5.56 |
| | Mass ratio*1 | - | - | - | 27.0% |
| Solvent | Type | PGM | PGM | PGM | PGM |
| | Amount (g) | 17.00 | 17.00 | 9.26 | 17.00 |
| Cationic photopolymerization initiator (C) | Type | CPI-100P | CPI-100P | CPI-100P | CPI-100P |
| | Solid content (g) | 0.67 | 0.67 | 0.67 | 0.67 |
| | Mass ratio (C/(B+D) *100 | 6.0% | 6.0% | 6.0% | 6.0% |
| Leveling agent | Type | Y7006 | Y7006 | Y7006 | Y7006 |
| | Solid content (g) | 0.03 | 0.03 | 0.03 | 0.03 |
| Total solid content (g) | | 20.57 | 20.57 | 20.70 | 20.57 |
| F/M*2 | | 0.8 | 0.8 | 0.8 | 0.8 |
| Heating polymerization was performed or not | | Not performed | Not performed | Not performed | Not performed |
| Heating polymerization temperature (°C) | | - | - | - | - |
| Heating polymerization time (h) | | - | - | - | - |
| Film thickness ($\mu$m) | | 1.74 | 2.34 | 2.70 | 2.10 |
| State of coating film | | Transparent | Transparent | Transparent | Transparent |
| SW film scratch resistance evaluation | | 5 | 5 | 4 | 3 |
| Adhesion test (%) | | 100 | 100 | 100 | 100 |

*1 Mass ratio with respect to total mass of composition (% by mass)
*2 Mass ratio (A/(B+D)

[Table 1-2]

Table 1 (2/2)

| | | Example 5 | Example 6 | Comparative Example 1 | Comparative Example 2 |
|---|---|---|---|---|---|
| Process | | UV | UV | UV | UV |
| Inorganic oxide (A) | Product name | PGM AC2140Y | MEK-EC2130Y | PGM-ST | PGM-ST |
| | Type of sol | $SiO_2$ | $SiO_2$ | $SiO_2$ | $SiO_2$ |
| | Affinity test (%) | 91 | 90 | 22 | 22 |
| | Total amount containing solvent (g) | 21.89 | 29.63 | 29.63 | 29.63 |
| | Solid content (g) | 8.76 | 8.89 | 8.89 | 8.89 |
| | Mass ratio *1 | 42.6% | 42.9% | 42.9% | 42.9% |
| Silane coupling agent (B) | Type | KBM403 | KBM403 | KBM403 | KBM403 |
| | Solid content (g) | 5.56 | 5.56 | 11.11 | 5.56 |
| | Mass ratio *1 | 27.0% | 26.8% | 53.7% | 26.8% |
| Polyfunctional epoxy compound (D) | Type | EX321 | EX321 | - | EX321 |
| | Solid content (g) | 5.56 | 5.56 | - | 5.56 |
| | Mass ratio *1 | 27.0% | 26.8% | - | 26.8% |
| Solvent | Type | PGM | PGM | PGM | PGM |
| | Amount (g) | 17.00 | 9.26 | 9.26 | 9.26 |
| Cationic photopolymerization initiator (C) | Type | CPI-100P | CPI-100P | CPI-100P | CPI-100P |
| | Solid content (g) | 0.67 | 0.67 | 0.67 | 0.67 |
| | Mass ratio (C/(B+D) *100) | 6.0% | 6.0% | 6.0% | 6.0% |
| Leveling agent | Type | Y7006 | Y7006 | Y7006 | Y7006 |
| | Solid content (g) | 0.03 | 0.03 | 0.03 | 0.03 |
| Total solid content (g) | | 20.57 | 20.70 | 20.70 | 20.70 |
| F/M*2 | | 0.8 | 0.8 | 0.8 | 0.8 |
| Heating polymerization was performed or not | | Not performed | Not performed | Not performed | Not performed |
| Heating polymerization temperature (°C) | | - | - | - | - |
| Heating polymerization time (h) | | - | - | - | - |
| Film thickness (μm) | | 2.52 | 2.90 | 2.86 | 3.20 |
| State of coating film | | Transparent | Transparent | Transparent | Transparent |
| SW film scratch resistance evaluation | | 3 | 2 | 0 | 0 |
| Adhesion test (%) | | 100 | 100 | 0 | 0 |

*1 Mass ratio with respect to total mass of composition (% by mass)
*2 Mass ratio (A/(B+D)

[Table 2-1]

Table 2 (1/2)

| | | Example 7 | Example 8 | Example 9 | Example 10 |
|---|---|---|---|---|---|
| Process | | UV + heat | UV + heat | UV + heat | UV + heat |
| Inorganic oxide (A) | Product name | V-8804 | PGM AC2140Y | MEK-EC2130Y | V-8804 |
| | Type of sol | $SiO_2$ | $SiO_2$ | $SiO_2$ | $SiO_2$ |
| | Affinity test (%) | 93 | 91 | 90 | 93 |
| | Total amount containing solvent (g) | 21.89 | 21.89 | 29.63 | 21.89 |
| | Solid content in the total amount (g) | 8.76 | 8.76 | 8.89 | 8.76 |
| | Mass ratio *1 | 42.6% | 42.6% | 42.9% | 42.6% |
| Silane coupling agent (B) | Type | KBM403 | KBM403 | KBM403 | KBM403 |
| | Solid content (g) | 11.11 | 11.11 | 11.11 | 5.56 |
| | Mass ratio *1 | 54.0% | 54.0% | 53.7% | 27.0% |
| Polyfunctional epoxy compound (D) | Type | - | - | - | EX321 |
| | Solid content (g) | - | - | - | 5.56 |
| | Mass ratio *1 | 0.0% | 0.0% | 0.0% | 27.0% |
| Solvent | Type | PGM | PGM | PGM | PGM |
| | Amount (g) | 17.00 | 17.00 | 9.26 | 17.00 |
| Cationic photopolymerization initiator (C) | Type | CPI-100P | CPI-100P | CPI-100P | CPI-100P |
| | Solid content (g) | 0.67 | 0.67 | 0.67 | 0.67 |
| | Mass ratio (C/(B+D) *100) | 6.0% | 6.0% | 6.0% | 6.0% |
| Leveling agent | Type | Y7006 | Y7006 | Y7006 | Y7006 |
| | Solid content (g) | 0.03 | 0.03 | 0.03 | 0.03 |
| Total solid content (g) | | 20.57 | 20.57 | 20.70 | 20.57 |
| F/M*2 | | 0.8 | 0.8 | 0.8 | 0.8 |
| Heating polymerization was performed or not | | Performed | Performed | Performed | Performed |
| Heating polymerization temperature (°C) | | 100 | 100 | 100 | 100 |
| Heating polymerization time (h) | | 1 | 1 | 1 | 1 |
| Film thickness (μm) | | 1.75 | 2.3 | 2.6 | 2 |
| State of coating film | | Transparent | Transparent | Transparent | Transparent |
| SW film scratch resistance evaluation | | 5 | 5 | 4 | 5 |
| Adhesion test (%) | | 100 | 100 | 100 | 100 |
| *1 Mass ratio with respect to total mass of composition (% by mass)<br>*2 Mass ratio (A/(B+D) | | | | | |

[Table 2-2]

Table 2 (2/2)

| | | Example 11 | Example 12 | Comparative Example 3 | Comparative Example 4 |
|---|---|---|---|---|---|
| Process | | UV + heat | UV + heat | UV + heat | UV + heat |
| Inorganic oxide (A) | Product name | PGM AC2140Y | MEK-EC2130Y | PGM-ST | PGM-ST |
| | Type of sol | $SiO_2$ | $SiO_2$ | $SiO_2$ | $SiO_2$ |
| | Affinity test (%) | 91 | 90 | 22 | 22 |
| | Total amount containing solvent (g) | 21.89 | 29.63 | 29.63 | 29.63 |
| | Solid content in the total amount (g) | 8.76 | 8.89 | 8.89 | 8.89 |
| | Mass ratio *1 | 42.6% | 42.9% | 42.9% | 42.9% |
| Silane coupling agent (B) | Type | KBM403 | KBM403 | KBM403 | KBM403 |
| | Solid content (g) | 5.56 | 5.56 | 11.11 | 5.56 |
| | Mass ratio *1 | 27.0% | 26.8% | 53.7% | 26.8% |
| Polyfunctional epoxy compound (D) | Type | EX321 | EX321 | - | EX321 |
| | Solid content (g) | 5.56 | 5.56 | - | 5.56 |
| | Mass ratio *1 | 27.0% | 26.8% | 0.0% | 26.8% |
| Solvent | Type | PGM | PGM | PGM | PGM |
| | Amount (g) | 17.00 | 9.26 | 9.26 | 9.26 |
| Cationic photopolymerization initiator (C) | Type | CPI-100P | CPI-100P | CPI-100P | CPI-100P |
| | Solid content (g) | 0.67 | 0.67 | 0.67 | 0.67 |
| | Mass ratio (C/(B+D) *100) | 6.0% | 6.0% | 6.0% | 6.0% |
| Leveling agent | Type | Y7006 | Y7006 | Y7006 | Y7006 |
| | Solid content (g) | 0.03 | 0.03 | 0.03 | 0.03 |
| Total solid content (g) | | 20.57 | 20.70 | 20.70 | 20.70 |
| F/M*2 | | 0.8 | 0.8 | 0.8 | 0.8 |
| Heating polymerization was performed or not | | Performed | Performed | Performed | Performed |
| Heating polymerization temperature (°C) | | 100 | 100 | 100 | 100 |
| Heating polymerization time (h) | | 1 | 1 | 1 | 1 |
| Film thickness (μm) | | 2.4 | 2.7 | 2.91 | 3.1 |
| State of coating film | | Transparent | Transparent | Transparent | Transparent |
| SW film scratch resistance evaluation | | 5 | 4 | 1 | 1 |
| Adhesion test (%) | | 100 | 100 | 100 | 100 |
| *1 Mass ratio with respect to total mass of composition (% by mass)<br>*2 Mass ratio (A/(B+D) | | | | | |

Examples 1 to 12 indicate that the coating composition according to the embodiment of the present disclosure exhibits excellent adhesion and scratch resistance.

Finally, the embodiment of the present disclosure will be summarized.

The embodiment of the present disclosure relates to a coating composition containing the hydrophobic inorganic oxide particles (A), the silane coupling agent (B), and the cationic photopolymerization initiator (C).

According to the above embodiment, it is possible to provide a coating composition for forming a hard coat layer having excellent adhesion and scratch resistance.

In addition, the embodiment of the present disclosure relates to a coating composition containing the hydrophobic inorganic oxide particles (A), the silane coupling agent (B), and the cationic photopolymerization initiator (C), having a light transmittance of more than 50% at a wavelength of 660 nm in an affinity test with a dipentaerythritol acrylate compound.

The embodiment of the present disclosure relates to a spectacle lens including a coat layer formed by curing the above coating composition of the embodiment and a substrate. According to the above embodiment, it is possible to provide a coating composition for forming a hard coat layer having excellent adhesion and scratch resistance.

The embodiment of the present disclosure relates to a method for producing a spectacle lens, including:

a step of applying the above coating composition of the embodiment onto a substrate; and
a step of curing the applied coating composition by irradiating the coating composition with an ultraviolet ray. According to the above embodiment, it is possible to provide a coating composition capable of forming a cured film in a short time to form a hard coat layer having excellent adhesion and scratch resistance.

The embodiment disclosed here are exemplary in all respects, and it should be considered that the embodiment is not restrictive. The scope of the present invention is defined not by the above description but by claims, and intends to include all modifications within meaning and a scope equal to claims.

## Claims

1. A coating composition comprising: hydrophobic inorganic oxide particles (A); a silane coupling agent (B); and a cationic photopolymerization initiator (C).

2. The coating composition according to claim 1, wherein the hydrophobic inorganic oxide particles (A) are at least one type of particles selected from the group consisting of silica particles and zirconia particles.

3. The coating composition according to claim 1 or 2, wherein the silane coupling agent (B) contains at least one organic functional group selected from the group consisting of an epoxy group and an oxetanyl group.

4. The coating composition according to any one of claims 1 to 3, wherein the hydrophobic inorganic oxide particles (A) have a light transmittance of more than 50% at a wavelength of 660 nm in a dipentaerythritol acrylate compound R-1 affinity test.

5. The coating composition according to any one of claims 1 to 4, further comprising a polyfunctional epoxy compound (D).

6. A spectacle lens comprising: a hard coat layer obtained by curing the coating composition according to any one of claims 1 to 5; and a substrate.

7. A method for producing a spectacle lens, comprising:

   a step of applying the coating composition according to any one of claims 1 to 5 onto a substrate; and
   a step of curing the applied coating composition by irradiating the coating composition with light.

8. The method for producing a spectacle lens according to claim 7, further comprising
   a step of heating the coating composition at 50 to 200°C after the curing step.

**INTERNATIONAL SEARCH REPORT**

International application No. PCT/JP2017/024249

A. CLASSIFICATION OF SUBJECT MATTER
*C09D201/00*(2006.01)i, *B05D3/06*(2006.01)i, *B05D7/24*(2006.01)i, *C08G59/68*(2006.01)i, *C08G65/18*(2006.01)i, *C08J7/04*(2006.01)i, *C09D7/12*(2006.01)i, *C09D163/00*(2006.01)i, *G02C7/02*(2006.01)i

According to International Patent Classification (IPC) or to both national classification and IPC

B. FIELDS SEARCHED

Minimum documentation searched (classification system followed by classification symbols)
C09D201/00, B05D3/06, B05D7/24, C08G59/68, C08G65/18, C08J7/04, C09D7/12, C09D163/00, G02C7/02

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2017 |
| Kokai Jitsuyo Shinan Koho | 1971-2017 | Toroku Jitsuyo Shinan Koho | 1994-2017 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | JP 2-269777 A (Swedlow, Inc.), 05 November 1990 (05.11.1990), claims; page 4, lower right column, lines 8 to 16; page 5, lower right column, lines 3 to 15; page 6, upper left column, line 15 to page 8, lower left column, line 12; page 10, lower left column, line 19 to page 11, upper left column, line 20; examples<br>& US 5296295 A<br>claims; column 2, lines 14 to 23; column 3, lines 30 to 43; column 4, line 1 to column 7, line 4; column 9, line 34 to column 10, line 9; examples<br>& EP 383074 A2 & AU 4912690 A<br>& CA 2008020 A & HK 1008042 A<br>& CN 1046545 A & CA 2008020 A1 | 1-8 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 21 July 2017 (21.07.17) | 01 August 2017 (01.08.17) |

| Name and mailing address of the ISA/ | Authorized officer |
|---|---|
| Japan Patent Office<br>3-4-3,Kasumigaseki,Chiyoda-ku,<br>Tokyo 100-8915,Japan | Telephone No. |

Form PCT/ISA/210 (second sheet) (January 2015)

**INTERNATIONAL SEARCH REPORT**

International application No. PCT/JP2017/024249

C (Continuation). DOCUMENTS CONSIDERED TO BE RELEVANT

| Category* | Citation of document, with indication, where appropriate, of the relevant passages | Relevant to claim No. |
|---|---|---|
| X | JP 2010-515778 A (Mitsui Chemicals, Inc.), 13 May 2010 (13.05.2010), claims; paragraphs [0011], [0073] to [0092], [0110], [0115], [0173] to [0174]; examples & US 2010/0029804 A1 claims; paragraphs [0015], [0098] to [0116], [0132], [0136], [0250] to [0251]; examples & WO 2008/087741 A1 & EP 2108027 A1 & CA 2675405 A & CN 101589121 A & KR 10-2010-0004941 A & AU 2007344107 A & MX 2009007055 A | 1-7 |
| X | JP 7-223301 A (Nippon ARC Co., Ltd.), 22 August 1995 (22.08.1995), claims; paragraphs [0003], [0005] to [0009], [0011], [0015] to [0016], [0018]; examples (Family: none) | 1-5 |
| X | JP 2005-089697 A (Toagosei Co., Ltd.), 07 April 2005 (07.04.2005), claims; paragraph [0008]; examples (Family: none) | 1-5 |
| X | WO 2016/098596 A1 (Kaneka Corp.), 23 June 2016 (23.06.2016), claims; paragraphs [0010], [0027] to [0039], [0099] to [0110], [0130] to [0140], [0163]; examples (Family: none) | 1-5 |
| A | JP 2005-139301 A (Nippon Kayaku Co., Ltd.), 02 June 2005 (02.06.2005), entire text (Family: none) | 1-8 |
| A | JP 2001-187812 A (JSR Corp.), 10 July 2001 (10.07.2001), entire text & US 2003/0099824 A1 entire text & WO 2001/048073 A1 & EP 1254193 A1 & AU 3244401 A & CN 1437632 A & KR 10-2002-0069359 A | 1-8 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2005343119 A
- JP 2010031090 A